# EUROPEAN PATENT SPECIFICATION

(11) **EP 4 453 280 B1**
(45) Date of publication and mention of the grant of the patent: **19.11.2025**
(21) Application number: 22843276.1
(22) Date of filing: 21.12.2022
(51) Int. Cl.: C25B 1/04, C25B 1/26, C25B 9/19, C25B 9/73, C25B 9/77

(54) **SEALED ELECTROLYSIS CELL**
ABGEDICHTETE ELEKTROLYSEZELLE
CELLULE ÉLECTROLYTIQUE ÉTANCHE

(30) Priority: 23.12.2021 EP 21217263
(43) Date of publication of application: 30.10.2024
(73) Proprietor: thyssenkrupp nucera AG & Co. KGaA, 44269 Dortmund (DE)
(72) Inventor: AYRAK, Emre, 45355 Essen (DE); TOROS, Peter, 45326 Essen (DE); KLINK, Stefan, 44789 Bochum (DE); BRINKMANN, Jonas, 44803 Bochum (DE)
(74) Representative: thyssenkrupp Intellectual Property GmbH
(86) International application number: PCT/EP2022/087203
(87) International publication number: WO 2023/118278

(56) References cited:
- EP-A2- 1 477 584
- JP-A- H10 286 572
- US-A- 4 894 128

## Description

### Background of the invention

The invention relates to a sealed electrolysis cell according to the preamble of claim 1.

Bipolar electrolyzers for large-scale production of hydrogen and/or chlorine (i.e. in the megawatt range) can be classified in two major design categories, namely single element design and filter-press design.

In an electrolysis cell of the single element design, the electrolysis cell is a separately sealed unit. Each electrolysis cell comprises two elements forming half-shells with a pan-shaped central portion and circumferential flange portion. The two half-shells are bolted together at their flange portions, with a separator, gaskets and an isolation layer interposed in-between. The sealing force for sealing the electrolysis cell is provided by the plurality bolts distributed circumferentially along the flange portions of the elements. The separator extends through the sealing arrangement to the outside of the cell and is clamped by overlapping gaskets from both sides. An example of this type of electrolysis cell is known e.g. from DE 10 2004 028 761 A1.

In a filter-press electrolyzer, a stack of electrolysis cells is formed in a cell rack by stacking a plurality of elements under interposition of sheet-like separators and gaskets between adjacent elements and compressing the complete stack in order to seal all electrolysis cells at once. In electrolyzers of filter-press design, each element delimits the anode chamber of one electrolysis cell and the cathode chamber of a neighboring electrolysis cell in the stack by a bipolar wall. The sealing force for all cells is provided by tie-rods extending along the stack. The sealing arrangement with the separator extending to the outside of the cell and being clamped by overlapping gaskets from both sides is similar to the single element design. An example of this type of electrolysis cell is known from JP 2012-193437 A.

In both types of electrolysis cells, either ion-exchange membranes or porous diaphragms are used as separators, depending on the intended use of the cell. For example, in chlor-alkali electrolysis membranes are used as separators, because the anode and the cathode chambers are filled with different types of electrolyte, namely brine and caustic, and mixing of these electrolytes is to be prevented by the membrane. Porous diaphragms, instead, are preferred for example in alkaline water electrolysis. In both cases, separators extending to the outside of the sealing arrangement are a potential risk for leakages of electrolyte to the outside of the cell, for example due to inaccuracies during assembly. In particular, in case of porous diaphragms the risk is increased by the capillary effect of the pores, by which the electrolyte can exit from the cell inside to the outside, caused by narrow spaces based on the internal structure of the diaphragm. The capillary effects cannot be stopped, independent of the applied forces. Rather it is a matter of time when the first leakage appears.

EP 3 608 445 A1 addresses the above-mentioned disadvantage of the conventional sealing arrangements and provides an alkaline water electrolyzer, wherein the porous diaphragm is held between the anode chamber frame and the cathode chamber frame via an anode gasket and a cathode gasket, wherein the anode gasket and the cathode gasket are in contact with each other around a peripheral edge of the porous diaphragm by compressing the anode and the cathode gasket. In order to secure the porous diaphragm within the cell and at the same time to safely prevent leakage from the cell, EP 3 608 445 A1 teaches to have at least a width of 3 mm each, for the contact width between the diaphragm and the gaskets and for the width of the direct contact of the gaskets. To fulfill these two tasks at the same time, the separator has to be manufactured and positioned within tight tolerances or gaskets of high width have to be used, requiring higher compression forces in order to provide a specified sealing surface pressure.

From EP 1 477 584 A2 an electrolysis cell sealing is known with a cell sealing cord and a cord-shaped spacer component, which is spaced from the sealing cord by a multiple of its maximum thickness or diameter. However, only the sealing cord on the inside has an effective sealing action. The spacer component has the purpose to reduce canting of the two halves of the cell housing to an insignificant degree when clamping the seal.

JP H10 286572 A describes a sealed electrolysis cell according to the preamble of claim 1. In order to surely prevent liquid leakage from the cathode chamber, two recessed grooves of doughnut shape are formed in the cathode chamber frame, into which grooves a first and a second seal material are being pushed, deformed and elastically packed. On its respective other side, the first seal material is in contact with an ion exchange membrane, while the second seal material is in contact with the inner side of the anode chamber frame.

### Brief Summary of Invention

The object of the invention is to provide an electrolysis cell with a sealing arrangement that is easy to assemble and safely prevents leakage from the cell.

This object is achieved by an electrolysis cell according to the features of claim 1.

Hereby, an electrolysis cell is provided comprising two elements, each of which comprising a central portion delimiting an anode chamber and a cathode chamber, respectively, and a circumferential flange portion. The electrolysis cell further comprises an anode accommodated in the anode chamber, a cathode accommodated in the cathode chamber, and a sheet-like separator with a circumferential edge. The separator is disposed between the two elements and separates the anode and cathode chambers. Further, the electrolysis cell comprises a sealing arrangement with at least a first gasket and a second gasket, wherein the sealing arrangement is disposed in a gap between the flange portions of the elements for fastening the separator and for sealing the anode chamber and the cathode chamber. According to the invention, the first gasket is an inner gasket positioned in a portion of the gap adjacent to the chambers and the second gasket is an outer gasket positioned in a portion of the gap distant to the chambers. The gaskets are spaced apart from each other in the gap at an interval, and the separator is fastened in the cell by means of the first gasket. The circumferential edge of the separator is located radially between a midpoint of the first gasket and a midpoint of the second gasket.

The interval between the gaskets is delimited by an outer edge of the inner, first gasket and an inner edge of the outer, second gasket. The interval in the sense of this disclosure is to be understood as a closed interval, i.e. including its endpoints.

The sealing arrangement according to the invention has the advantage that the two functions of the gaskets, namely to fix the separator inside the electrolysis cell to avoid internal leakages between the chambers and to prevent leakages to the outside, are separately fulfilled by one gasket each. By the offset arrangement of the first and second gasket and positioning the separator edge in the space between the midpoints of the two gaskets, it is achieved that the separator has no direct contact to the outside of the cell. The gap between the flange portions of the elements in rather closed completely to the outside by at least half of the width of the outer gasket. The inner gasket fixes the separator in the electrolysis cell and prevents leakage, in particular gas leakages, between the anode and the cathode chambers.

The interval between the two gaskets further has the advantageous effect that it provides for an additional manufacturing tolerance for the separator cutting as well as a tolerance for the separator positioning during assembly of the cell. With the separator edge to be positioned between the midpoints of the two gaskets, the tolerance for the separator corresponds to the sum of the interval and the average width of the two gaskets. Thus, the manufacturing of the cell is simplified.

Preferably, the edge of the separator is located in the interval between the first gasket and the second gasket. Thus, the edge of the separator may either lie between the outer edge of the first gasket and the inner edge of the second gasket or be flush with either of these edges. In these embodiments, the complete width of the first gasket is utilized to fasten the separator in the cell and the complete width of the second gasket is utilized for outer cell sealing, resulting in a particularly safe sealing of the cell. Further, the outer gasket can be used as a form-fitting positioning aid for the separator during assembly of the cell.

In preferred embodiments, the separator is a porous diaphragm. The inventive sealing arrangement is particularly useful in combination with porous diaphragms, as leakages due to the capillary effects are particularly difficult to prevent in the conventional sealing arrangements. Since the capillary effects of the porous structure only reach up to the edge of the separator, which is safely sealed to the outside by the second gasket, capillary effects cannot sidestep the sealing arrangement according to the invention.

Preferably, the sealing arrangement comprises exactly two gaskets. Two gaskets are sufficient to provide one gasket for each function, i.e. inner and outer sealing of the cell. Dispensing of any additional gaskets simplifies assembly and reduces material costs.

The sealing arrangement further comprises an electrically isolating layer, which is disposed in the gap such that a first side of the layer is in contact with the first gasket and a second, opposite side of the layer is in contact with the second gasket. The isolating layer provides for an electrical isolation between the elements. By arranging the gaskets on opposite sides of the isolating layer a particularly good sealing performance is achieved, since each flange portion is in direct contact with one of the gaskets.

The width of the interval between the gaskets is subject to a trade-off between easy manufacture due to large tolerances at high interval widths and large space requirements coming with high interval width. For practical reasons, the interval is preferably chosen in the range of 1 mm to 20 mm, more preferably between 2 mm and 10 mm. In particular, the interval is preferably in the range of 0.5 to 1.5 times the smallest width of the gaskets.

Preferably, gaskets are compressed within the gap by means of a screwed connection of the flange portions. In particular it is preferred, that the screwed connection comprises at least two beams compressing the flange portions from both sides and bolts connecting the beams, which bolts are positioned on the outer side of the second gasket. In such an arrangement, the bolts do not compromise the sealing effect of the gaskets, as they are positioned on the outer side of both gasket. The beams are used transfer the force applied by the bolts radially inwards to the first and second as to provide the required sealing surface pressure.

In preferred embodiments, the central portions are pan-shaped half-shells and the electrolysis cell is of single element design. In alternative embodiments, the central portions form a bipolar wall and the flange portions are provided by a solid frame, such that the elements are configured to be stacked according to the filter-press design.

The elements are preferably made of a metal, particularly preferably of nickel and/or titanium.

In particular, the invention relates to electrolysis cells of industrial scale to be used for chlor-alkali or alkaline water electrolysis. The separator of the electrolysis cell according to the invention therefore preferably has an area of 1 m² to 5 m². Further, the electrolysis cell is preferably configured for current densities of at least 3 kA/m².

Further advantages of the invention are described in the following with regard to the embodiments shown in the attached drawings.

### Brief Description of Drawings

- Fig. 1: shows schematically in a cross-sectional partly exploded view a first embodiment of the inventive electrolysis cell of single element design,
- Fig. 2: show schematically in a cross-sectional partly exploded view a second embodiment of the inventive electrolysis cell of filter-press design.

### Detailed Description of Invention

In the drawings same parts are consistently identified by the same reference signs and are therefore generally described and referred to only once.

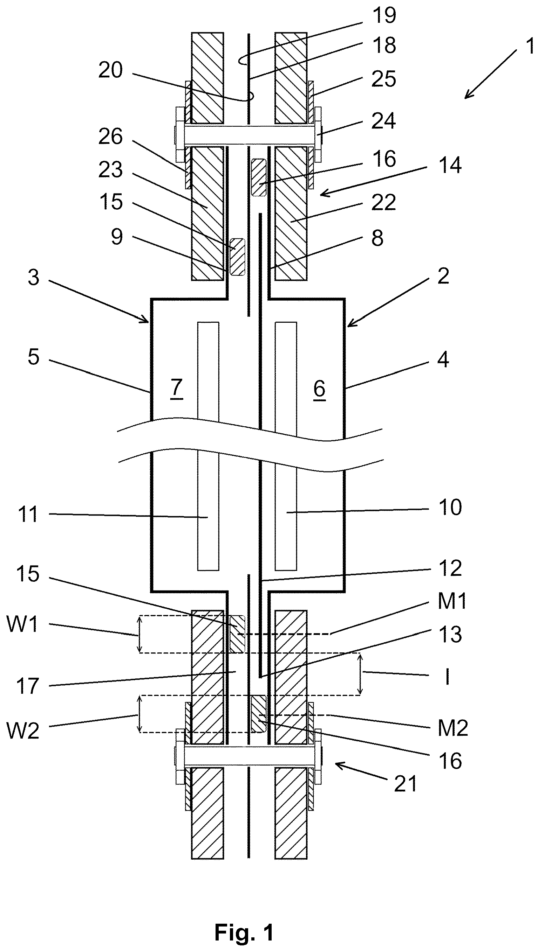

In **Fig. 1****,** a first embodiment of the inventive electrolysis cell 1 is shown in a partly exploded state.

The electrolysis cell 1 comprises two elements 2, 3. Each element 2, 3 includes a central portion 4, 5 delimiting an anode chamber 6 and a cathode chamber 7, respectively, and a circumferential flange portion 8, 9. In the anode chamber 6 an anode 10 is accommodated and in the cathode chamber 7 a cathode 11 is accommodated.

Further, the anode and cathode chamber 6, 7 contain elements for supporting the electrodes 10, 11 and for current distribution, as well as components to distribute electrolyte within the cell 1 and to discharge used electrolyte and electrolysis products from the cell 1. These elements are not shown in Fig. 1 for simplicity.

The electrolysis cell 1 further comprises a sheet-like separator 12 with a circumferential edge 13. The separator 12 is disposed between the two elements 2, 3 and separates the anode and cathode chambers 6, 7. In addition, the electrolysis cell 1 comprises a sealing arrangement 14 with a first gasket 15 and a second gasket 16. The sealing arrangement 14 is disposed in a gap 17 between the flange portions 8, 9 of the elements 2, 3 for fastening the separator 12 and for sealing the anode chamber 6 and the cathode chamber 7.

The first gasket 15 is an inner gasket positioned in a portion of the gap 17 adjacent to the chambers 6, 7 and the second gasket 16 is an outer gasket positioned in a portion of the gap 17 distant to the chambers 6, 7. The gaskets 15, 16 are spaced apart from each other in the gap 17 at an interval I. The separator 12 it fastened in the cell 1 by means of the first gasket 15. The circumferential edge 13 of the separator 12 is located radially between a midpoint M1 of the first gasket 15 and a midpoint M2 of the second gasket 16. The midpoints M1, M2 are midpoints with respect to the width direction of the gaskets 15, 16, i.e. in the radial direction of the cell 1.

In the embodiment shown in Fig. 1 the edge 13 of the separator 12 is located in the interval I between the first gasket 15 and the second gasket 16. The interval I is preferably in the range of 1 mm to 20 mm, more preferably between 2 mm and 10 mm.

The gaskets 15, 16 may be, for example, frame-shaped rubber sheets. The gasket 15, 16 are required to have resistance to, for example, corrosive electrolytes and generated gases, and also required to be workable for a long term. In view of chemical resistance and hardness, therefore, the gaskets 15, 16 are preferably made of, for example, vulcanized or peroxide-crosslinked ethylene-propylene-diene rubber (EPDM) or ethylene-propylene rubber (EPM). If necessary, the gasket to be used may also be covered with fluororesin such as polytetrafluoroethylene (PTFE) or tetrafluoroethylene-perfluoroalkyl vinyl ether copolymer (PFA) at least at its region to be in contact with liquids.

The separator 12 is preferably a porous diaphragm. Particularly preferably, the porous diaphragm may be a diaphragm for alkaline water electrolysis. Such a diaphragm for alkaline water electrolysis typically includes a sheet-shaped porous support and an organic polymer resin with which the support is impregnated. The support may be a nonwoven fabric, a woven fabric, or a composite of nonwoven and woven fabrics. The support is preferably made of fibers of at least one selected from the group consisting of polyphenylene sulfide, polypropylene, polysulfone, polyether sulfone, polyphenyl sulfone, fluororesin, polyketone, polyimide, and polyether imide. The organic polymer resin preferably includes at least one selected from the group consisting of polysulfone, polyether sulfone, polyphenyl sulfone, polyvinylidene fluoride, polycarbonate, polytetrafluoroethylene, polypropylene, polyphenylene sulfide, polyketone, polyether ether ketone, polyimide, and polyether imide.

Alternatively, the separator 12 may be an ion-exchange membrane.

The sealing arrangement 14 further comprises an electrically isolating layer 18, which is disposed in the gap 17 such that a first side 19 of the layer 18 is in contact with the first gasket 15 and a second, opposite side 20 of the layer 18 is in contact with the second gasket 16.

The interval I is preferably in the range of 0.5 to 1.5 times the smallest width W1, W2 of the gaskets 15, 16. The smallest width W1, W2 is to be measured in an uncompressed state of the gaskets. The gaskets 15, 16 preferably have a width in the range of 4 mm to 10 mm and a height in the range of 1 mm to 4 mm in the uncompressed state.

The central portions 4, 5 of the elements 2, 3 in Fig. 1 are pan-shaped half-shells and the electrolysis cell 1 is of single element design. The gaskets 15, 16 are compressed within the gap by means of a screwed connection 21 of the flange portions 8, 9. The screwed connection 21 comprises at least two beams 22, 23 compressing the flange portions 8, 9 from both sides and bolts 24 connecting the beams 22, 23 in a tightened state of the bolts 24. The bolts 24 are positioned on the outer side of the second gasket 16. In order to transfer and distribute the bolt forces to the beams 22, 23, washers 25, 26 are preferably provided.

As compared to the partly exploded state shown Fig. 1, in an operative state of the cell 1, the bolts 24 are fastened, such that the gaskets 15, 16 are compressed in the gap 17 and the separator 12 as well as the isolating layer 18 are clamped between the flange portions 8, 9.

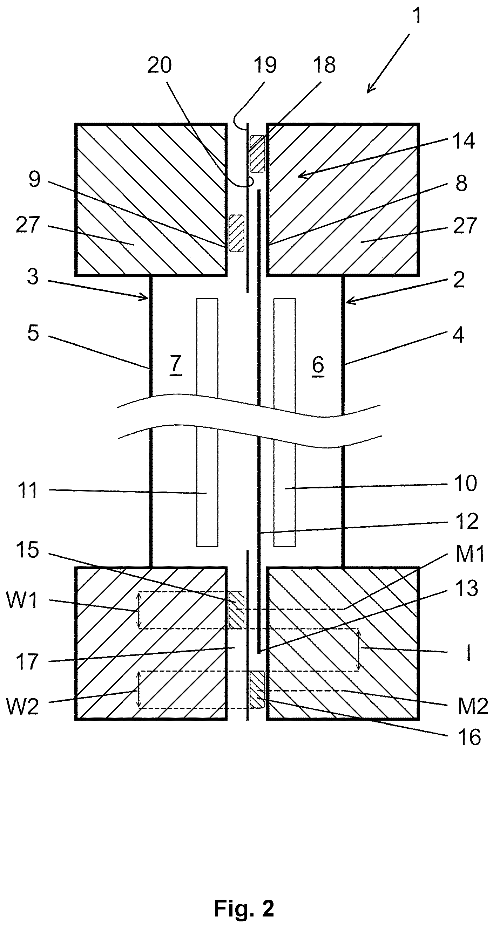

**Fig. 2** shows a second embodiment of the electrolysis cell 1 according to the invention. The electrolysis cell 1 shown in Fig. 2 differs from the first embodiment in that the central portions 4, 5 of the elements 2, 3 form a bipolar wall and the flange portions 8, 9 are provided by a solid frame 27. The elements 2, 3 are thus configured to be stacked according to the filter-press design. In the filter-press design, the sealing force for all electrolysis cells 1 of the stack is provided by tie-rods extending along the stack.

In all other respects, the description of the first embodiment shown in Fig. 1 is applicable to the second embodiment shown in Fig. 2, accordingly.

### List of Reference Signs

- 1: electrolysis cell
- 2, 3: element
- 4, 5: central portion
- 6: anode chamber
- 7: cathode chamber
- 8, 9: circumferential flange portion
- 10: anode
- 11: cathode
- 12: separator
- 13: edge of separator
- 14: sealing arrangement
- 15: first gasket
- 16: second gasket
- 17: gap
- 18: isolating layer
- 19: first side of isolating layer
- 20: second side of isolating layer
- 21: screwed connection
- 22, 23: frame
- 24: bolts
- 25, 26: washer

- I: Interval
- W1: Width of first gasket
- W2: Width of second gasket
- M1: Midpoint of first gasket
- M2: Midpoint of second gasket

## Claims

1. An electrolysis cell comprising:
two elements (2, 3), each comprising
a central portion (4, 5) delimiting an anode chamber (6) and a cathode chamber (7), respectively, and
a circumferential flange portion (8, 9),
an anode (10) accommodated in the anode chamber (6),
a cathode (11) accommodated in the cathode chamber (7),
a sheet-like separator (12) with a circumferential edge (13), the separator (12) being disposed between the two elements (2, 3) and separating the anode and cathode chambers (6, 7), and
a sealing arrangement (14) comprising at least a first gasket (15) and a second gasket (16), wherein the sealing arrangement (14) is disposed in a gap (17) between the flange portions (8, 9) of the elements (2, 3) for fastening the separator (12) and for sealing the anode chamber (6) and the cathode chamber (7),
wherein the first gasket (15) is an inner gasket positioned in a portion of the gap (17) adjacent to the chambers (6, 7) and the second gasket (16) is an outer gasket positioned in a portion of the gap (17) distant to the chambers (6, 7),
wherein the gaskets (15, 16) are spaced apart from each other in the gap (17) at an interval (I) and the separator (12) is fastened in the cell (1) by means of the first gasket (15), and wherein the circumferential edge (13) of the separator (12) is located radially between a midpoint (M1) of the first gasket (15) and a midpoint (M2) of the second gasket (16),
**characterized in that**
the sealing arrangement (14) further comprises an electrically isolating layer (18), which is disposed in the gap (17) such that a first side (19) of the layer (18) is in contact with the first gasket (15) and a second, opposite side (20) of the layer (18) is in contact with the second gasket (16).

2. The electrolysis cell according to claim 1. **characterized in that** the edge (13) of the separator (12) is located in the interval (I) between the first gasket (15) and the second gasket (16).

3. The electrolysis cell according to claim 1 or 2, **characterized in that** the separator (12) is a porous diaphragm.

4. The electrolysis cell according to one of the claims 1 to 3, **characterized in that** the sealing arrangement (14) comprises exactly two gaskets (15, 16).

5. The electrolysis cell according to one of the claims 1 to 4, **characterized in that** the interval (I) is in the range of 1 mm to 20 mm.

6. The electrolysis cell according to one of the claims 1 to 5, **characterized in that** the interval (I) is in the range of 0.5 to 1.5 times the smallest width (W1, W2) of the gaskets (15, 16).

7. The electrolysis cell according to one of the claims 1 to 6, **characterized in that** the gaskets (15, 16) are compressed within the gap (17) by means of a screwed connection (21) of the flange portions (8, 9).

8. The electrolysis cell according to claim 7. **characterized in that** the screwed connection (21) comprises at least two beams (22, 23) compressing the flange portions (8, 9) from both sides and bolts (24) connecting the beams (22, 23), which bolts (24) are positioned on the outer side of the second gasket (16).

9. The electrolysis cell according to one of the claims 1 to 8, **characterized in that** the central portions (4, 5) are pan-shaped half-shells and the electrolysis cell (1) is of single element design.

10. The electrolysis cell according to one of the claims 1 to 6, **characterized in that** the central portions (4, 5) form a bipolar wall and flange portions (8, 9) are provided by a solid frame (27), such that the elements (2, 3) are configured to be stacked according to the filter-press design.

## Patentansprüche

1. Elektrolysezelle, umfassend:
zwei Elemente (2, 3), die jeweils Folgendes umfassen
einen Mittelteil (4, 5), der jeweils entsprechend eine Anodenkammer (6) und eine Kathodenkammer (7) begrenzt, und
einen umlaufenden Flanschabschnitt (8, 9),
eine Anode (10), die in der Anodenkammer (6) angeordnet ist,
eine in der Kathodenkammer (7) angeordnete Kathode (11),
einen blattartigen Separator (12) mit einem Umfangsrand (13), wobei der Separator (12) zwischen den beiden Elementen (2, 3) angeordnet ist und die Anoden- und Kathodenkammer (6, 7) voneinander trennt, und
eine Dichtungsanordnung (14), die mindestens eine erste Dichtung (15) und eine zweite Dichtung (16) umfasst, wobei die Dichtungsanordnung (14) in einem Spalt (17) zwischen den Flanschabschnitten (8, 9) der Elemente (2, 3) angeordnet ist, um den Separator (12) zu befestigen und die Anodenkammer (6) und die Kathodenkammer (7) abzudichten,
wobei die erste Dichtung (15) eine innere Dichtung ist, die in einem den Kammern (6, 7) benachbarten Abschnitt des Spalts (17) angeordnet ist, und die zweite Dichtung (16) eine äußere Dichtung ist, die in einem von den Kammern (6, 7) entfernten Abschnitt des Spalts (17) angeordnet ist,
wobei die Dichtungen (15, 16) im Spalt (17) in einem Abstand (I) voneinander beabstandet sind und der Separator (12) mittels der ersten Dichtung (15) in der Zelle (1) befestigt ist, und wobei sich der Umfangsrand (13) des Separators (12) radial zwischen einem Mittelpunkt (M1) der ersten Dichtung (15) und einem Mittelpunkt (M2) der zweiten Dichtung (16) befindet,
**dadurch gekennzeichnet, dass**
die Dichtungsanordnung (14) ferner eine elektrisch isolierende Schicht (18) umfasst, die in dem Spalt (17) so angeordnet ist, dass eine erste Seite (19) der Schicht (18) mit der ersten Dichtung (15) in Kontakt steht und eine zweite, gegenüberliegende Seite (20) der Schicht (18) mit der zweiten Dichtung (16) in Kontakt steht.

2. Elektrolysezelle nach Anspruch 1, **dadurch gekennzeichnet, dass** sich der Rand (13) des Separators (12) in dem Abstand (I) zwischen der ersten Dichtung (15) und der zweiten Dichtung (16) befindet.

3. Elektrolysezelle gemäß Anspruch 1 oder 2, **dadurch gekennzeichnet, dass** der Separator (12) ein poröses Diaphragma ist.

4. Elektrolysezelle gemäß einem der Ansprüche 1 bis 3, **dadurch gekennzeichnet, dass** die Dichtungsanordnung (14) genau zwei Dichtungen (15, 16) umfasst.

5. Elektrolysezelle nach einem der Ansprüche 1 bis 4, **dadurch gekennzeichnet, dass** der Abstand (I) im Bereich von 1 mm bis 20 mm liegt.

6. Elektrolysezelle nach einem der Ansprüche 1 bis 5, **dadurch gekennzeichnet, dass** der Abstand (I) im Bereich des 0,5- bis 1,5-fachen der kleinsten Breite (W1, W2) der Dichtungen (15, 16) liegt.

7. Elektrolysezelle nach einem der Ansprüche 1 bis 6, **dadurch gekennzeichnet, dass** die Dichtungen (15, 16) innerhalb des Spalts (17) mittels einer Schraubverbindung (21) der Flanschabschnitte (8, 9) zusammengedrückt werden.

8. Elektrolysezelle nach Anspruch 7, **dadurch gekennzeichnet, dass** die Schraubverbindung (21) mindestens zwei Träger (22, 23), die die Flanschabschnitte (8, 9) von beiden Seiten zusammendrücken, und Bolzen (24) umfasst, die die Träger (22, 23) verbinden, wobei die Bolzen (24) auf der Außenseite der zweiten Dichtung (16) positioniert sind.

9. Elektrolysezelle nach einem der Ansprüche 1 bis 8, **dadurch gekennzeichnet, dass** die Mittelteile (4, 5) wannenförmige Halbschalen sind und die Elektrolysezelle (1) im Einzelzellendesign ausgebildet ist.

10. Elektrolysezelle gemäß einem der Ansprüche 1 bis 6, **dadurch gekennzeichnet, dass** die Mittelteile (4, 5) eine bipolare Wand bilden und Flanschabschnitte (8, 9) durch einen massiven Rahmen (27) bereitgestellt werden, sodass die Elemente (2, 3) so konfiguriert sind, dass sie gemäß der Filterpressenkonstruktion gestapelt werden können.

## Revendications

1. Cellule d'électrolyse comprenant :
deux éléments (2, 3), chacun comprenant
une partie centrale (4, 5) délimitant respectivement une chambre anodique (6) et une chambre cathodique (7), et
une partie de bride circonférentielle (8, 9),
une anode (10) logée dans la chambre anodique (6),
une cathode (11) logée dans la chambre cathodique (7),
un séparateur en forme de feuille (12) avec un bord circonférentiel (13), le séparateur (12) étant disposé entre les deux éléments (2, 3) et séparant les chambres d'anode et de cathode (6, 7), et
un dispositif d'étanchéité (14) comprenant au moins un premier joint (15) et un deuxième joint (16), dans lequel le dispositif d'étanchéité (14) est disposé dans un espace (17) entre les parties de bride (8, 9) des éléments (2, 3) pour fixer le séparateur (12) et pour étanchéifier la chambre anodique (6) et la chambre cathodique (7),
dans lequel le premier joint (15) est un joint intérieur positionné dans une partie de l'espace (17) adjacente aux chambres (6, 7) et le deuxième joint (16) est un joint extérieur positionné dans une partie de l'espace (17) éloignée des chambres (6, 7),
dans lequel les joints (15, 16) sont espacés l'un de l'autre dans l'espace (17) à un intervalle (I) et le séparateur (12) est fixé dans la cellule (1) au moyen du premier joint (15), et dans lequel le bord circonférentiel (13) du séparateur (12) est situé radialement entre un point médian (M1) du premier joint (15) et un point médian (M2) du deuxième joint (16),
**caractérisé en ce que**
le dispositif d'étanchéité (14) comprend en outre une couche électriquement isolante (18), qui est disposée dans l'espace (17) de telle sorte qu'un premier côté (19) de la couche (18) est en contact avec le premier joint (15) et qu'un deuxième côté opposé (20) de la couche (18) est en contact avec le deuxième joint (16).

2. Cellule d'électrolyse selon la revendication 1, **caractérisée en ce que** le bord (13) du séparateur (12) est situé dans l'intervalle (I) entre le premier joint (15) et le deuxième joint (16).

3. Cellule d'électrolyse selon la revendication 1 ou 2, **caractérisée en ce que** le séparateur (12) est un diaphragme poreux.

4. Cellule d'électrolyse selon l'une des revendications 1 à 3, **caractérisée en ce que** le dispositif d'étanchéité (14) comprend exactement deux joints (15, 16).

5. Cellule d'électrolyse selon l'une des revendications 1 à 4, **caractérisée en ce que** l'intervalle (I) est compris entre 1 mm et 20 mm.

6. Cellule d'électrolyse selon l'une des revendications 1 à 5, **caractérisée en ce que** l'intervalle (I) est compris entre 0,5 et 1,5 fois la plus petite largeur (W1, W2) des joints (15, 16).

7. Cellule d'électrolyse selon l'une des revendications 1 à 6, **caractérisée en ce que** les joints (15, 16) sont comprimés dans l'espace (17) au moyen d'un raccord vissé (21) des parties de bride (8, 9).

8. Cellule d'électrolyse selon la revendication 7, **caractérisée en ce que** la connexion vissée (21) comprend au moins deux poutres (22, 23) comprimant les parties de bride (8, 9) des deux côtés et des boulons (24) reliant les poutres (22, 23), lesquels boulons (24) sont positionnés sur le côté extérieur du deuxième joint (16).

9. Cellule d'électrolyse selon l'une des revendications 1 à 8, **caractérisée en ce que** les parties centrales (4, 5) sont des demi-coques en forme de cuvette et la cellule d'électrolyse (1) est de conception à élément unique.

10. Cellule d'électrolyse selon l'une des revendications 1 à 6, **caractérisée en ce que** les parties centrales (4, 5) forment une paroi bipolaire et des parties de bride (8, 9) sont fournies par un cadre solide (27), de telle sorte que les éléments (2, 3) sont configurés pour être empilés selon la conception du filtre-presse.
